# EUROPÄISCHE PATENTSCHRIFT

(11) **EP 3 855 063 B1**
(45) Veröffentlichungstag und Bekanntmachung des Hinweises auf die Patenterteilung: **29.10.2025**
(21) Anmeldenummer: 21153008.4
(22) Anmeldetag: 22.01.2021
(51) Int. Cl.: F17D 5/02, G01M 3/28, E03B 7/07

(54) **VORRICHTUNG ZUM DETEKTIEREN EINER FLÜSSIGKEITSLECKAGE**
DEVICE FOR DETECTING A FLUID LEAK
DISPOSITIF DE DÉTECTION D'UNE FUITE DE LIQUIDE

(30) Priorität: 24.01.2020 DE 102020101694
(43) Veröffentlichungstag der Anmeldung: 28.07.2021
(73) Patentinhaber: SenseGuard GmbH, 40545 Düsseldorf (DE)
(72) Erfinder: DEPIERE, Bert, 3150 Wakkerzeel (BE)

(56) Entgegenhaltungen:
- EP-A1- 3 561 456
- WO-A2-2019/186093
- CA-A1- 2 523 659
- US-A1- 2018 127 957
- US-A1- 2019 331 547

## Beschreibung

Die vorliegende Erfindung betrifft eine Vorrichtung zum Detektieren einer Flüssigkeitsleckage in einer Flüssigkeitsleitung. Die Vorrichtung dient insbesondere der Verhinderung von Wasserschäden durch austretende Flüssigkeiten.

In Gebäuden ist regelmäßig eine Vielzahl von Flüssigkeitsleitungen verlegt, die von einer Flüssigkeitsquelle, wie zum Beispiel einem öffentlichen Wasserversorgungsnetz, zu unterschiedlichen Verbrauchern, wie zum Beispiel Sanitärarmaturen, Spülmaschinen oder Waschmaschinen, führen. An diesen Flüssigkeitsleitungen können Leckagen beispielsweise in Form von Rohrbrüchen oder Rissen entstehen, durch die Flüssigkeit austreten kann. Die austretende Flüssigkeit kann an den Austrittsstellen zu großen Schäden an dem Gebäude, einem Mauerwerk und/oder an Einrichtungen des Gebäudes führen.

Aus diesem Grund sind bereits Wasserzähler mit einer Leckagedetektionsfunktion bekannt, beispielsweise aus WO 2019/186093 A2, US 2018/0127957 A1, EP 3 561 456 A1 und US 2019/0331547 A1, bei denen Leckagen beispielsweise mittels Durchflusssensoren, Drucksensoren oder andere Sensoren detektierbar sind. Die Ausstattung der Wasserzähler mit der Leckagedetektionsfunktion (optional mit Absperrfunktion) führt jedoch zu höheren Herstellungskosten und damit höheren Anschaffungskosten, die durch Käufer bei der Anschaffung der Wasserzähler getragen werden müssen.

Aufgabe der Erfindung ist daher, die mit Bezug auf den Stand der Technik geschilderten Probleme zumindest teilweise zu lösen und insbesondere eine Vorrichtung zum Detektieren und gegebenenfalls Absperren einer Leckage anzugeben, die eine Reduzierung der Anschaffungskosten erlaubt.

Diese Aufgabe wird gelöst mit einer Vorrichtung gemäß den Merkmalen des unabhängigen Patentanspruchs. Weitere vorteilhafte Ausgestaltungen der Erfindung sind in den abhängig formulierten Patentansprüchen angegeben. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt eine Vorrichtung zum Detektieren einer Flüssigkeitsleckage bei, wobei eine Leckagedetektionsfunktion der Vorrichtung sperrbar ist, sodass die Leckagedetektionsfunktion gegen eine unberechtigte Nutzung schützbar ist.

Die Vorrichtung dient dem Detektieren einer Leckage insbesondere an einer Flüssigkeitsleitung, die beispielsweise zumindest teilweise in einem Gebäude und/oder von einer Flüssigkeitsquelle, wie zum Beispiel einem öffentlichen Flüssigkeitsversorgungsnetz, zu zumindest einem Verbraucher, wie zum Beispiel einer Sanitärarmatur, einer Spülmaschine oder einer Waschmaschine, verläuft. Die Flüssigkeitsleitung dient insbesondere der Führung einer Flüssigkeit und/oder besteht insbesondere zumindest teilweise aus Kunststoff oder aus Metall, wie zum Beispiel Kupfer. Bei der Flüssigkeit handelt es sich insbesondere um Wasser. Weiterhin kann die Flüssigkeitsleitung insbesondere einen Durchmesser von mindestens 10 mm (Millimeter), bevorzugt 10 mm bis 30 mm oder besonders bevorzugt (circa) 12,7 mm (0,5" (Zoll)) aufweisen. Die Vorrichtung ist insbesondere an die Flüssigkeitsleitung anschließbar. Hierzu kann die Vorrichtung einen Flüssigkeitseinlass und einen Flüssigkeitsauslass aufweisen. Die Flüssigkeit kann insbesondere von dem Flüssigkeitseingang durch die Vorrichtung zu dem Flüssigkeitsauslass fließen. Bei der Vorrichtung kann es sich insbesondere um einen Wasserzähler handeln. Hierzu kann die Vorrichtung beispielsweise einen Durchflusssensor aufweisen, mittels dem eine Durchflussmenge der Flüssigkeit durch die Flüssigkeitsleitung erfassbar ist.

Die Vorrichtung weist zum Detektieren der Flüssigkeitsleckage eine Leckagedetektionsfunktion auf. Die Leckagedetektionsfunktion kann insbesondere mithilfe eines Durchflusssensors, Temperatursensors, Vibrationssensor, akustischen Sensors und/oder anderen Sensoren zur Detektion einer Leckage ausgebildet sein. Beispielsweise kann die Leckagedetektionsfunktion mithilfe eines Ventils und eines Drucksensors ausgebildet sein. Während der Detektion der Leckage kann in einem Schritt a) die Flüssigkeitsleitung beispielsweise mit dem Ventil geschlossen werden. Bei dem Ventil kann es sich insbesondere um ein elektrisch betätigbares Ventil, beispielsweise nach Art eines Magnetventils oder Kugelventils, handeln. Hierdurch wird der zumindest eine Verbraucher der Flüssigkeit von der Flüssigkeitsquelle getrennt und zwischen dem geschlossenen Ventil und dem (geschlossenen) zumindest einen Verbraucher ein Druckraum in der Flüssigkeitsleitung gebildet.

Anschließend kann in einem Schritt b) mittels des Drucksensors ein erster Druckabfall in dem Druckraum der Flüssigkeitsleitung bestimmt werden. Dies erfolgt insbesondere durch eine Messung des Drucks in dem Druckraum über einen vorgegebenen Messzeitraum, wobei es sich bei dem Druckabfall um das Gefälle des Drucks in dem Messzeitraum handelt. Die Messung des Drucks erfolgt insbesondere mit dem Drucksensor, der an der Flüssigkeitsleitung und/oder in dem Druckraum der Flüssigkeitsleitung oder in der Vorrichtung angeordnet ist.

Nach Abschluss der Bestimmung des ersten Druckabfalls kann in einem Schritt c) das Ventil wieder geöffnet und nach Ablauf einer vorgegebenen Zeitspanne in einem Schritt d) zum erneuten Bilden des Druckraums in der Flüssigkeitsleitung wieder geschlossen werden. Nach dem erneuten Schließen der Flüssigkeitsleitung in Schritt d) kann in einem Schritt e) in dem Druckraum der Flüssigkeitsleitung ein zweiter Druckabfall bestimmt werden. Die Bestimmung des zweiten Druckabfalls erfolgt dabei insbesondere auf gleiche Weise wie die Bestimmung des ersten Druckabfalls. Nach Abschluss der Bestimmung des zweiten Druckabfalls kann in einem Schritt f) der erste Druckabfall mit dem zweiten Druckabfall verglichen werden. Die Schritte a) bis f) können somit insbesondere aufeinanderfolgend beziehungsweise in chronologischer Reihenfolge durchgeführt werden. Der Vergleich erfolgt insbesondere mit Hilfe eines Mikrocontrollers der Vorrichtung, der insbesondere datenleitend mit dem Drucksensor verbunden ist und mittels dem das Ventil betätigbar ist. Sind der erste Druckabfall und der zweite Druckabfall (im Wesentlichen) identisch, lässt dies auf eine Tropfleckage schließen. Sind demgegenüber der erste Druckabfall und der zweite Druckabfall verschieden, lässt dies auf eine gewollte Flüssigkeitsentnahme an dem zumindest einem Verbraucher schließen. Eine Tropfleckage liegt in diesem Fall nicht vor.

Im Falle einer Leckage kann durch die Vorrichtung insbesondere ein Alarmsignal ausgebbar sein, durch das ein Benutzer oder ein Bewohner des Gebäudes über die Leckage informierbar ist. Weiterhin kann im Falle einer Leckage die Vorrichtung insbesondere die Flüssigkeitsleitung absperren, beispielsweise mittels des Ventils. Die Leckagedetektionsfunktion kann somit insbesondere auch eine Absperrfunktion für die Flüssigkeitsleitung umfassen.

Die Leckagedetektionsfunktion der Vorrichtung ist sperrbar, sodass die Leckagedetektionsfunktion gegen eine unberechtigte Nutzung geschützt ist. "Sperrbar" bedeutet in diesem Zusammenhang insbesondere nicht nur, dass die Leckagedetektionsfunktion deaktivierbar oder abschaltbar ist, sondern dass diese ohne (geprüftes oder überprüfbares) Vorliegen einer Nutzungsberechtigung nicht aktivierbar ist. Dies kann insbesondere bedeuten, dass die Leckagedetektionsfunktion nur nach Nachweis einer Nutzungsberechtigung freischaltbar ist. Die Nutzungsberechtigung der Leckagedetektionsfunktion kann beispielsweise durch eine Steuerung der Vorrichtung oder ein externes Kontrollsystem der Vorrichtung prüfbar und/oder steuerbar sein. Die Steuerung kann hierzu beispielsweise einen Mikroprozessor aufweisen und/oder eingerichtet sein, kryptographische Verfahren anzuwenden bzw. durchzuführen. Weiterhin kann die Steuerung beispielsweise als Cloud-System ausgebildet und/oder in einer Cloud-Umgebung realisiert sein.

Die Freigabe bzw. das "Entsperren" der Leckagedetektionsfunktion kann beispielsweise durch Eingabe oder Übermittlung eines Pin-Codes an die Vorrichtung, durch einen Security-Token und/oder in der Cloud erfolgen. Beispielsweise kann die Leckagedetektionsfunktion auch zeitlich begrenzt, beispielsweise während eines Urlaubs, während einer längeren Abwesenheit, an bestimmten Tagen, während der Miete einer Wohnung, während der Miete eines Hotelzimmers oder zu bestimmten Zeiten, entsperrbar bzw. freigebbar sein. Die Sperrbarkeit der Leckagedetektionsfunktion ermöglicht eine nutzungsabhängige Berechnung der Leckagedetektionsfunktion. Hierdurch können die Anschaffungskosten der Vorrichtung durch eine nachträgliche Berechnung der Nutzung der Leckagedetektionsfunktion reduziert werden. Die Berechnung der Nutzung der Leckagedetektionsfunktion kann dabei an den Benutzer oder Eigentümer der Vorrichtung oder an eine dritte Partei erfolgen.

Die Leckagedetektionsfunktion kann mechanisch sperrbar oder entsperrbar sein. Hierzu kann die Vorrichtung beispielsweise ein Schloss aufweisen. Die Nutzungsberechtigung der Leckagedetektionsfunktion kann hierbei insbesondere mittels eines, insbesondere mechanischen, Schlüssels erfolgen, durch den das Schloss in eine Entsperrstellung verstellbar ist.

Die Leckagedetektionsfunktion kann elektronisch sperrbar oder entsperrbar sein. Hierzu kann beispielsweise ein (elektronisches) Sperrsignal und/oder Entsperrsignal an die Vorrichtung übertragbar sein. Bei dem Sperrsignal und/oder Entsperrsignal kann es sich beispielsweise um eine (elektronische) Zeichenkombination handeln.

Die Leckagedetektionsfunktion kann durch einen elektronischen Schlüssel sperrbar oder entsperrbar sein. Bei dem elektronischen Schlüssel kann es sich insbesondere um eine (elektronische) Zeichenkombination handeln.

Die Leckagedetektionsfunktion kann in einem Auslieferungszustand der Vorrichtung gesperrt sein. Bei dem Auslieferungszustand handelt es sich insbesondere um einen Zustand vor einer erstmaligen Inbetriebnahme der Vorrichtung.

Die Vorrichtung kann eine Kommunikationseinrichtung aufweisen, mittels der eine Sperrung oder Entsperrung der Leckagedetektionsfunktion fernsteuerbar ist. Die Kommunikationseinrichtung dient insbesondere der Datenkommunikation und/oder kann nach Art einer Kommunikationsschnittstelle, wie zum Beispiel eine Ethernet-Schnittstelle, LAN-Schnittstelle, WAN-Schnittstelle, WLAN-Schnittstelle, Bluetooth-Schnittstelle und/oder dergleichen, ausgebildet sein. Durch die Kommunikationseinrichtung ist die Vorrichtung insbesondere mit einem Smartphone oder einem entfernten Datenverarbeitungssystem, beispielsweise einem Server oder Cloud-Lösung, verbindbar. Zudem kann insbesondere das Alarmsignal mittels der Kommunikationseinrichtung sendbar sein.

Die Vorrichtung kann an eine Flüssigkeitsleitung anschließbar sein.

Die Vorrichtung kann nach Art eines Flüssigkeitszählers ausgebildet sein. Mittels des Flüssigkeitszählers ist insbesondere eine durch die Flüssigkeitsleitung strömende Flüssigkeitsmenge erfassbar. Beispielsweise ist mittels des Flüssigkeitszählers ein Flüssigkeitsverbrauch zumindest eines Verbrauchers bzw. einer Flüssigkeitsverbrauchseinheit, wie zum Beispiel einem Wohngebäude, Geschäftsgebäude, Wohnung oder einem Hotelzimmer, bestimmbar. Bei dem Flüssigkeitszähler kann es sich insbesondere um einen Wasserzähler handeln. Der durch die Vorrichtung erfasste Wasserverbrauch kann insbesondere digital übertragbar und/oder auslesbar sein. Das Sperren bzw. Deaktivieren der Leckagedetektionsfunktion der Vorrichtung führt insbesondere nicht zu einer Deaktivierung des Flüssigkeitszählers bzw. einer Flüssigkeitszählfunktion der Vorrichtung. Somit ist die Vorrichtung insbesondere auch bei gesperrter bzw. deaktivierter Leckagedetektionsfunktion als Flüssigkeitszähler bzw. Wasserzähler verwendbar. Durch die Vorrichtung kann dadurch ein Standardwasserzähler ersetzt werden.

Erfindungsgemäß weist die Vorrichtung eine Steuerung auf, wo-bei die Steuerung zur Durchführung der Schritte des folgenden Verfahrens eingerichtet ist:
a) Empfangen eines elektronischen Entsperrsignals oder Sperrsignals,
b) Prüfen des Entsperrsignals oder Sperrsignals und
c) Freigeben oder Sperren der Leckagedetektionsfunktion in Abhängigkeit von der Prüfung in Schritt b).

Die Vorrichtung kann zusätzlich insbesondere eine Flüssigkeitsleitung, ein Ventil zum Absperren der Flüssigkeitsleitung, einen Sensor, wie zum Beispiel einen Temperatursensor, einen akustischen Sensor, einen Vibrationssensor, einen Sensor zur Bestimmung einer Wasserqualität (zum Beispiel für Säure, Salz, Kalkstein und/oder dergleichen) und/oder einen Durchflusssensor zur Messung eines Durchflusses einer Flüssigkeit durch die Flüssigkeitsleitung aufweisen. Insbesondere ist ein Mikroprozessor der Steuerung zur Durchführung der Schritte des Verfahrens eingerichtet. Bei dem Sperrsignal und/oder Entsperrsignal kann es sich beispielsweise um eine (elektronische) Zeichenkombination handeln. In Schritt b) kann insbesondere eine Prüfung erfolgen, ob das Entsperrsignal oder das Sperrsignal von einer zur Freigabe oder Sperrung der Leckagedetektionsfunktion bzw. Leckagedetektionsfunktionseinheit berechtigten Quelle gesendet wurde. Ergibt die Prüfung, dass das Entsperrsignal oder das Sperrsignal von einer zur Freigabe oder Sperrung der Leckagedetektionsfunktion berechtigten Quelle stammt, wird in Schritt c) die Leckagedetektionsfunktion freigegeben oder gesperrt. Ergibt die Prüfung, dass das Entsperrsignal oder das Sperrsignal nicht von einer zur Freigabe oder Sperrung der Leckagedetektionsfunktion berechtigten Quelle stammt, wird die Durchführung des Schritts c) unterbunden, sodass der ursprüngliche Status (gesperrt oder entsperrt) der Leckagedetektionsfunktion nicht geändert wird.

Die Erfindung sowie das technische Umfeld werden nachfolgend anhand der Figur näher erläutert. Es ist darauf hinzuweisen, dass die Figur eine besonders bevorzugte Ausführungsvariante der Erfindung zeigt, diese jedoch nicht darauf beschränkt ist. Es zeigt beispielhaft und schematisch:

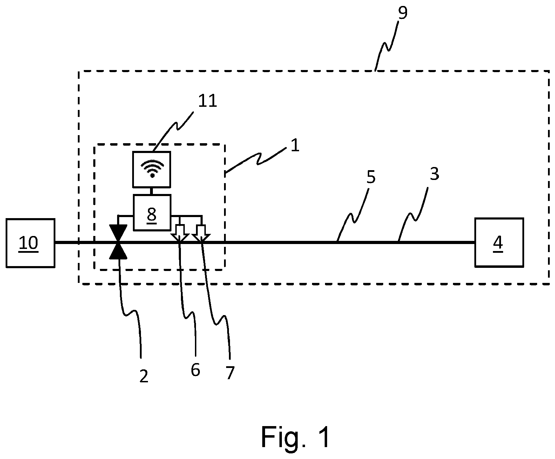

- Fig. 1:: eine Vorrichtung zum Detektieren einer Flüssigkeitsleckage in einer Flüssigkeitsverbrauchseinheit.

Die Fig. 1 zeigt eine schematisch dargestellte Vorrichtung 1 in einer Flüssigkeitsverbrauchseinheit 9, bei der es sich beispielsweise um ein Wohngebäude handeln kann. Die Vorrichtung 1 ist in einer Flüssigkeitsleitung 5 angeordnet, durch die Flüssigkeit von einer Flüssigkeitsquelle 10 zu zumindest einem Verbraucher 4 führbar ist. Zudem umfasst die Vorrichtung 1 einen Durchflusssensor 6, durch den eine Durchflussmenge der Flüssigkeit durch die Flüssigkeitsleitung 5 bestimmbar ist. Die Vorrichtung 1 ist hier daher nach Art eines Flüssigkeitszählers ausgebildet, durch den ein Flüssigkeitsverbrauch des zumindest einen Verbrauchers 4 bzw. der Flüssigkeitsverbrauchseinheit 9 bestimmbar ist. Hierzu ist die Vorrichtung 1 mit einer hier nicht dargestellten Energiequelle, beispielsweise nach Art einer (wiederaufladbaren) Batterie oder einem öffentlichen Energieversorgungsnetz, mit elektrischer Energie versorgbar. Weiterhin weist die Vorrichtung 1 ein Ventil 2 nach Art eines Magnetventils auf, mittels dem die Flüssigkeitsleitung 5 bei einer Detektion einer Leckage verschließbar ist. Zur Detektion der Leckage weist die Vorrichtung 1 eine Leckagedetektionsfunktion auf. Die Leckagedetektionsfunktion der Vorrichtung 1 kann durch die Energiequelle der Vorrichtung 1 oder durch eine andere Energiequelle, beispielsweise durch ein sogenanntes Powernet, mit elektrischer Energie versorgbar sein. Bei Verwendung einer anderen Energiequelle, kann diese auch zur Aufladung einer wiederaufladbaren Batterie der Vorrichtung 1 genutzt werden. Zur Umsetzung der Leckagedetektionsfunktion ist bei der hier gezeigten Ausführungsvariante der Vorrichtung 1 das Ventil 2 zum Bilden eines Druckraums 3 in der Flüssigkeitsleitung 5 schließbar. Der Druckraum 3 erstreckt sich dabei von dem Ventil 2 bis zu dem Verbraucher 4. Weiterhin weist die Vorrichtung 1 einen Drucksensor 7 auf, mittels dem ein Druck und somit ein Druckabfall in dem Druckraum 3 nach dem Schließen der Flüssigkeitsleitung 5 mit dem Ventil 2 bestimmbar ist. Das Schließen der Flüssigkeitsleitung 5 mit dem Ventil 2 erfolgt, wenn durch den Durchflusssensor 6 der Vorrichtung 1 ermittelt wurde, dass keine Flüssigkeitsentnahme über die Flüssigkeitsleitung 5 aus der Flüssigkeitsquelle 10 durch den zumindest einen Verbraucher 4 erfolgt. Das Ventil 2, der Durchflusssensor 6 und der Drucksensor 7 sind datenleitend mit einer Steuerung 8 der Vorrichtung 1 drahtlos oder per Funkverbindung verbunden. Die Steuerung 8 ist zudem mit einer Kommunikationseinrichtung 11 verbunden, mittels der eine Sperrung oder Entsperrung der Leckagedetektionsfunktion fernsteuerbar ist. Hierzu kann die Steuerung 8 über die Kommunikationseinrichtung 11, zum Beispiel über das Internet, eine Verbindung zu einem hier nicht gezeigten Steuersystem aufbauen.

Durch die vorliegende Erfindung können die Anschaffungskosten einer Vorrichtung zum Detektieren einer Flüssigkeitsleckage gesenkt werden.

### Bezugszeichenliste

- 1: Vorrichtung
- 2: Ventil
- 3: Druckraum
- 4: Verbraucher
- 5: Flüssigkeitsleitung
- 6: Durchflusssensor
- 7: Drucksensor
- 8: Steuerung
- 9: Flüssigkeitsverbrauchseinheit
- 10: Flüssigkeitsquelle
- 11: Kommunikationseinrichtung

## Patentansprüche

1. Vorrichtung (1) zum Detektieren einer Flüssigkeitsleckage, wobei eine Leckagedetektionsfunktion der Vorrichtung (1) sperrbar im Sinne von deaktivierbar und nur nach Nachweis einer Nutzungsberechtigung aktivierbar ist, sodass die Leckagedetektionsfunktion gegen eine unberechtigte Nutzung schützbar ist, wobei die Leckagedetektionsfunktion in einem Auslieferungszustand der Vorrichtung (1) gesperrt ist, wobei die Vorrichtung (1) eine Steuerung (8) aufweist, die zur Durchführung der Schritte des folgenden Verfahrens eingerichtet ist:
a) Empfangen eines elektronischen Entsperrsignals oder Sperrsignals,
b) Prüfen des Entsperrsignals oder Sperrsignals, und
c) Freigeben oder Sperren der Leckagedetektionsfunktion in Abhängigkeit von der Prüfung in Schritt b).

2. Vorrichtung (1) nach Patentanspruch 1, wobei die Leckagedetektionsfunktion mechanisch sperrbar oder entsperrbar ist.

3. Vorrichtung (1) nach einem der vorhergehenden Patentansprüche, wobei die Leckagedetektionsfunktion elektronisch sperrbar oder entsperrbar ist.

4. Vorrichtung (1) nach einem der vorhergehenden Patentansprüche, wobei die Leckagedetektionsfunktion durch einen elektronischen Schlüssel sperrbar oder entsperrbar ist.

5. Vorrichtung (1) nach einem der vorhergehenden Patentansprüche, aufweisend eine Kommunikationseinrichtung (11), mittels der eine Sperrung oder Entsperrung der Leckagedetektionsfunktion fernsteuerbar ist.

6. Vorrichtung (1) nach einem der vorhergehenden Patentansprüche, wobei die Vorrichtung (1) an eine Flüssigkeitsleitung (5) anschließbar ist.

7. Vorrichtung (1) nach einem der vorhergehenden Patentansprüche, wobei die Vorrichtung (1) nach Art eines Flüssigkeitszählers ausgebildet ist.

## Claims

1. A device (1) for detecting a liquid leakage, wherein a leakage detection function of the device (1) is lockable within the meaning of being deactivatable and can only be activated after proof of authorization of use, so that the leakage detection function can be protected against unauthorized use, wherein the leakage detection function is locked in a delivery state of the device (1), wherein the device (1) has a controller (8) which is configured to perform the steps of the following method:
a) receiving an electronic unlock signal or lock signal,
b) checking the unlock signal or lock signal, and
c) enabling or locking the leakage detection function depending on the check in step b).

2. The device (1) according to claim 1, wherein the leakage detection function is mechanically lockable or unlockable.

3. The device (1) according to any one of the preceding claims, wherein the leakage detection function is electronically lockable or unlockable.

4. The device (1) according to any one of the preceding claims, wherein the leakage detection function is lockable or unlockable by an electronic key.

5. The device (1) according to any one of the preceding claims, having a communication device (11) by means of which locking or unlocking the leakage detection function is remotely controllable.

6. The device (1) according to any one of the preceding claims, wherein the device (1) is connectable to a liquid line (5).

7. The device (1) according to any one of the preceding claims, wherein the device (1) is designed in the manner of a liquid meter.

## Revendications

1. Dispositif (1), destiné à détecter une fuite de liquide, une fonction de détection de fuite du dispositif (1) étant susceptible d'être bloquée dans le sens de désactivable et activable uniquement après justification d'un droit d'utilisation, de telle sorte que la fonction de détection de fuite puisse être protégée contre une utilisation non autorisée, dans un état de livraison du dispositif (1), la fonction de détection de fuite étant bloquée, le dispositif (1) comportant un système de commande (8), qui est configuré pour réaliser les étapes du procédé suivant, consistant à :
a) réceptionner un signal de déblocage ou signal de blocage électronique,
b) vérifier le signal de déblocage ou signal de blocage et
c) valider ou bloquer la fonction de détection de fuite en fonction de la vérification dans l'étape b).

2. Dispositif (1) selon la revendication 1 du brevet, la fonction de détection de fuite étant susceptible d'être bloquée ou débloquée mécaniquement.

3. Dispositif (1) selon l'une quelconque des revendications précédentes du brevet, la fonction de détection de fuite la fonction de détection de fuite étant susceptible d'être bloquée ou débloquée électroniquement.

4. Dispositif (1) selon l'une quelconque des revendications précédentes du brevet, la fonction de détection de fuite étant susceptible d'être bloquée ou débloquée par une clé électronique.

5. Dispositif (1) selon l'une quelconque des revendications précédentes du brevet, comportant un système de communication (11), au moyen duquel un blocage ou un déblocage de la fonction de détection de fuite est susceptible d'être télécommandé.

6. Dispositif (1) selon l'une quelconque des revendications précédentes du brevet, le dispositif (1) pouvant se raccorder sur une conduite de liquide (5).

7. Dispositif (1) selon l'une quelconque des revendications précédentes du brevet, le dispositif (1) étant conçu à la manière d'un compteur de liquide.
